# FASCICULE DE BREVET EUROPEEN

(11) **EP 4 569 389 B1**
(45) Date de publication et mention de la délivrance du brevet: **05.11.2025**
(21) Numéro de dépôt: 23754321.0
(22) Date de dépôt: 10.08.2023
(51) Int. Cl.: G05D 1/00

(54) **PROCÉDÉ ET SYSTÈME DE TRANSPORT D'ARTICLES**
VERFAHREN UND SYSTEM ZUM TRANSPORT VON GEGENSTÄNDEN
METHOD AND SYSTEM FOR TRANSPORTING ITEMS

(30) Priorité: 12.08.2022 FR 2208289
(43) Date de publication de la demande: 18.06.2025
(73) Titulaire: Fives Xcella, 56260 Lamor-Plage (FR)
(72) Inventeur: CHERIF IDRISSI EL GANOUNI, Oussama, 75009 Paris (FR)
(74) Mandataire: Novagraaf Group
(86) Numéro de dépôt international: PCT/EP2023/072245
(87) Numéro de publication internationale: WO 2024/033507

(56) Documents cités:
- US-A1- 2022 019 237
- US-B1- 10 037 029

## Description

### Domaine technique de l'invention

L'invention concerne le domaine de l'intralogistique et porte sur un système et un procédé de transport d'objets utilisant des robots mobiles autonomes (ou des véhicules automatiquement guidés), chacun pouvant déplacer au moins un article.

Un tel système de transport peut avoir des applications par exemple dans une installation de tri ou dans un système de stockage automatique.

### Etat de la technique

De nombreuses applications telles que celles décrites ci-dessus utilisent des robots mobiles autonomes (AMRs) ou des véhicules automatiquement guidés (AGVs) pour transporter dans une installation intralogistique des objets à trier ou à stocker. Le nombre important de tels robots/véhicules circulant en même temps dans le circuit génère un risque de collisions entre robots/véhicules et nécessite donc de gérer leurs déplacements en tenant compte de ce facteur. Généralement, le risque de collisions est limité avec des circuits sans croisements ou bien en implémentant des règles de priorité permettant de gérer l'ordre de passage des AMRs/AGVs aux croisements. Ces règles peuvent être satisfaisantes dans certains cas où la cadence de travail est faible, néanmoins cela n'est généralement pas suffisant lorsque les taches à réaliser nécessitent une importante cadence, soit pour trier les objets, pour les stocker ou pour les sortir du stock pour préparer des commandes.

Par ailleurs, les systèmes connus ne règlent certaines situations qu'en influençant la cadence vers le bas. Par exemple, dans le cas où deux robots/véhicules se suivent sur une même piste de circulation, la moindre bifurcation du premier robot induit un ralentissement ou un arrêt du robot suivant pour éviter une collision. La répétition de tels ralentissements et/ou arrêts réduit inévitablement la cadence de travail des robots/véhicules et donc de toute l'installation.

L'objectif de la présente invention est de proposer une nouvelle solution permettant d'augmenter la cadence de travail des AMRs/AGVs sur un circuit intralogistique tout en limitant le risque de collisions.

### Résumé de l'invention

A cet effet, l'invention concerne un procédé de transport d'articles dans un système intralogistique utilisant des robots mobiles autonomes ou des véhicules automatiquement guidés, susceptibles chacun de transporter un article dans un circuit de transport dudit système, le procédé comprenant une étape dans laquelle on forme un convoi comprenant au moins deux robots/véhicules circulant à une même vitesse au moins sur une portion dudit circuit de transport.

En formant un convoi il devient possible de réduire la distance moyenne entre les robots mobiles autonomes ou véhicules automatiquement guidés, en conséquence on augmente le débite de déplacement d'articles.

On entend par un convoi un ensemble de robots mobiles autonomes (ou d'AGVs) se déplaçant suivant une seule piste ou suivant des pistes paralleles en étant proches (selon des distances de séparation déterminées) et sensiblement à la meme vitesse.

On entend par sensiblement la meme vitesse que les AMRs/AGVs d'un meme convoi peuvent par exemple avoir la meme vitesse dans les sections droites du circuit et peuvent avoir un profil de vitesse identique dans des virages pour changer de direction, leurs vitesses restant très proches le long du trajet.

Selon l'invention, ladite étape de formation du convoi est éxécutée dans une section dite d'introduction et comprend une définition d'une grille de positions théoriques pouvant chacune être occupée par un robot mobile autonome, ladite grille comprenant une pluralité de pistes parallèles et une pluralité de rangs parallèles et successifs croisant lesdites pistes en formant un angle différent de zéro avec les pistes, le convoi comprenant deux robots ou plus de rangs différents positionnés de manière que deux robots de rangs successifs d'une même piste sont espacés d'une distance minimale prédéterminée.

L'utilisation d'une telle grille de positions théoriques permet de générer différentes dispositions possibles des AMRs (ou AGVs) pour former un convoi. De telles positions peuvent comprendre des convois avec des robots d'une seule piste ou des robots de pistes différentes. Un convoi est formé dans la portion du circuit appelée section d'introduction. Les robots arrivant dans cette section avec des vitesses pouvant être différentes, sont organisés dans cette zone en adaptant leurs vitesses et/ou en changeant leurs positions de sorte à les placer sur une ou plusieurs pistes et avec des rangs correspondant aux rangs de la grille théorique. Une fois qu'un convoi a été formé les robots mobiles (ou les AGVs) se déplacent ensemble avec sensiblement la même vitesse. Optionnellement il peut être possible de sélectionner la meilleure configuration en comparant les configurations possibles. Cette configuration peut être choisi pour permettre un déplacement plus fluide des AMRs.

La distance minimale permet d'éviter des collisions entre les robots mobiles d'une même piste le long du trajet.

Avantageusement, l'étape de formation d'un convoi comprend une sous-étape dans laquelle deux positions théoriques de la grille ayant un même rang et appartenant à deux pistes adjacentes sont décalées suivant la direction longitudinale de la section d'introduction d'une distance égale à l'écart entre lesdites deux pistes adjacentes (suivant la direction transversale).

Avantageusement, les rangs dans la section d'introduction forment avec les pistes un angle de +45° ou -45° correspondant respectivement à une orientation positive ou négative du convoi.

Avantageusement, on ajoute au circuit de transport une section de distribution reliée à la section d'introduction, ladite section de distribution ayant une ou plusieurs pistes parallèles d'entrée de robots croisant plusieurs pistes parallèles de sortie des robots, lesdites pistes de sortie formant avec les pistes d'entée de robots un angle de déviation différent de zéro, le procédé comprend en outre une étape de déplacement des robots dudit convoi entre lesdites pistes d'entrée et lesdites pistes de sortie avec sensiblement la même vitesse.

Avantageusement, l'angle de déviation définit une orientation positive ou négative de la section de distribution. Si l'angle est négatif (positif) on considerera que la section de distribution est orientée négativement (positivement).

Le nombre de pistes d'entrée peut etre égal au nombre de pistes de la zone d'introduction.

La section de distribution étant formée par une ou des pistes d'entrée croisant des pistes de sortie, à chaque croisement il y a possibilité pour un AMR/AGV de changer de direction, ainsi toutes les sorties sont accessibles à partir de n'importe quelle entrée. Ceci permet de choisir le meilleur itinéraire et donc en conséquence on améliore le débit en multipliant les trajets possibles.

En outre, la section de distribution, lorsqu'elle est traversée par un convoi ayant la bonne configuration (orientation et distance entre véhicules) il n'y aura pas de collision entre les véhicules quel que soit la sortie sélectionnée. En particulier, ceci est possible grâce au maintient d'une distance minimale entre les robots d'une même piste et au décalage longitudinal des range appartenant à des pistes parallèles.

Avantageusement, les robots peuvent être contrôlés de sorte à se regrouper suivant une configuration reformant un convoi en sortie de la section de distribution.

Avantageusement, on ajoute au circuit circuit une section de distribution additionnelle, ayant une ou plusieurs deuxièmes pistes parallèles d'entrée de robots croisant une ou plusieurs deuxièmes pistes parallèles de sortie des robots, lesdites deuxièmes pistes de sortie formant avec les deuxièmes pistes d'entrée de robots un angle de déviation différent de zéro et ,optionnellement, d'orientation inverse par rapport à l'angle de la section de distribution, le procédé comprend en outre une étape de déplacement du convoi entre lesdites deuxièmes pistes d'entrée et l'une au moins desdites deuxièmes pistes de sortie avec sensiblement la même vitesse. On multiple donc davantage les trajectoires possibles tout en évitant les collisions, ce qui fluidifie davantage les déplacements des AMRs/AGVs.

Avantageusement, l'angle de déviation définit une orientation positive ou négative de la section de distribution. Si l'angle est négatif (positif) on considerera que la section de distribution est négative (positive).

Ceci permet de multiplier le nombre de possibilité d'un AMR/AGV de changer d'orientation sans risque de collision.

Avantageusement, la section de distribution et/ou les sections de distribution additionnelles peuvent êtres à sens unique, pour réduire le risque de collisions.

Selon des exemples de réalisation, l'angle de déviation de la section de distribution et/ou d'une section de distribution additionnelle est de -90° ou 90°.

Lorsque deux sections de distribution sont agencées successivement, l'orientation de la deuxième section distribution peut dépendre de l'orientation de la première section de distribution. Par exemple, si la section de distribution est orientée positivement (l'angle de déviation est positif), la deuxième sera orientée négativement.

L'orientation du convoi dans la section d'introduction peut dépendre de l'orientation de la section de distribution. Par exemple, si la section de distribution est orientée positivement alors le convoi sera également orienté positivement.

Avantageusement, le procédé peut comprendre une étape de changement de l'orientation du convoi par accélération et/ou décélération des robots mobiles autonomes dans une zone de réorientation prévue entre deux sections de distribution successives.

Selon un mode de réalisation la distance entre deux pistes a=L+d, L étant la longueur du robot. Dans ce mode avantageux, lorsque les pistes parallèles de connexion entre deux sections de distribution successifs sont écartées de L+d (L étant la longueur d'un véhicule et d la distance entre deux véhicules dans un convoi), il n'y a pas besoin de changer l'orientation du convoi éviter les collisions.

Dans des exemples de réalisation, le convoi comprend au moins deux robots mobiles autonomes sur la même piste.

Selon des exemples de réalisation, lorsqu'un premier robot suivi par un deuxième robot du même convoi sur la même piste d'entrée emprunte une première piste de sortie, alors le deuxième rebot emprunte une deuxième piste de sortie située avant la première piste de sortie.

Ceci évite des collisions entre les robots/véhicules d'une même piste et d'un même convoi.

Selon des exemples de réalisation, lorsqu'un premier robot d'un premier rang et un deuxième robot d'un rang suivant du même convoi, arrivent par deux pistes d'entrée parallèles et destinés à emprunter une même piste de sortie, le premier robot arrivant par une première piste d'entrée, le deuxième robot arrive alors par une deuxième piste d'entrée plus éloignée par rapport à une extrémité de sortie de ladite piste de sortie.

Ceci évite des collisions entre les robots/véhicules successifs parallèles d'un même convoi.

Avantageusement, un convoi est espacé d'un convoi précédent d'une distance de sécurité D prédéterminée. Ceci permet d'éviter des collisions entre robots mobiles de deux convois successifs dans les sections de distribution.

L'invention porte également sur un programme informatique comprenant des instructions pour mettre en œuvre les étapes du procédé décrit ci-dessus.

L'invention concerne également un support lisible par ordinateur comprenant le programme informatique décrit ci-dessus.

L'invention porte également sur un système de transport intralogistique comprenant :
- une pluralité de robots mobiles autonomes susceptibles chacun de transporter un objet,
- un circuit de transport au sol dans lequel peuvent circuler les robots mobiles,
- un programme informatique tel que décrit cidessus.

Ledit système est configuré pour mettre en œuvre le procédé selon la description ci-dessus.

L'invention porte par ailleure sur une installation de tri d'articles comprenant une zone de tri et un sytème de transport tel que décrit ci-dessus.

L'invention porte également sur une installation de stockage automatique d'articles, comprenant une zone de stockage d'articles présentant une pluralité de niveaux de stockage et des moyens de montée et descente reliant lesdits niveaux, ladite installation comprend en outre un système de transport tel que décrit ci-dessus.

### Brève description des figures

D'autres particularités et avantages de l'invention apparaîtront dans la description ci-après en relation avec les dessins annexés, donnés à titre d'exemples non limitatifs, dans lesquelles :
[Fig.1] la figure 1 représente schématiquement un circuit de transport avec des robots formant des convois ;
[Fig.2] la figure 2 représente schématiquement une section d'introduction
[Fig.3] la figure 3 montre un exemple de section de distribution reliée à la section d'introduction ;
[Fig.4] la figure 4 montre deux sections de distribution successives ;
[Fig.5] la figure 5 montre une zone de réorientation ;
[Fig.6] la figure 6 montre un exemple d'installation de tri mettant en œuvre le procédé selon l'invention.

Dans la suite de la description, des éléments présentant une structure identique ou des fonctions analogues seront désignés par les mêmes références.

### Description détaillée

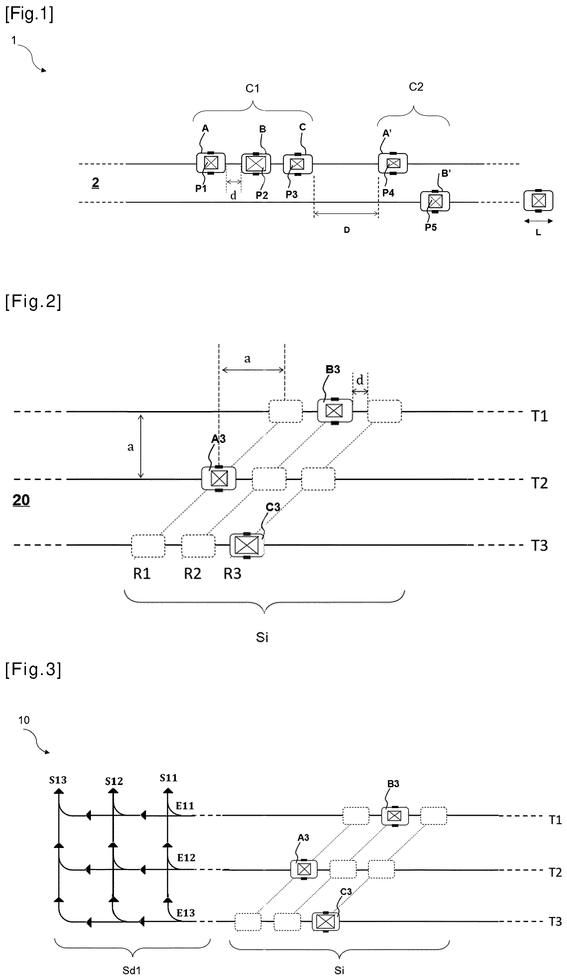

La figure 1 est une vue schématique partielle d'un système 1 de transport intralogistique. Le système 1 comprend un circuit 2 de transport, montré partiellement, et un ensemble de robots mobiles autonomes (AMR) ou des AGVs référencés A1, B1, C1, A2, B2. Par souci de simplification, nous parlerons dans la suite de la description seulement d'AMRs en gardant à l'esprit qu'ils peuvent être aussi des AGVs ou d'autres moyens de transports similaires, parfois appelés navettes ou chariots dans le domaine de l'intralogistique.

Le système comprend également des moyens de contrôle non représentés. De tels moyens peuvent comprendre des moyens de contrôle centraux communicant avec des moyens de contrôle locaux agencés dans chaque AMR. Les moyens de contrôle comprennent entre un ou des programmes informatiques de contrôle.

Le circuit 2 comprend par exemple 2 pistes parallèles comme sur la figure 1. Les robots A1, B1 et C1 circulant successivement sur la même piste forment un premier convoi C1, dans lequel les robots A1, B1, C1 circulent avec une même vitesse et chaque robot est espacé du suivant d'une distance de sécurité d. Cette distance *d* est déterminée de sorte à éviter les collisions entre chaque robot et le robot suivant du même convoi circulant sur la même piste.

Les AMRs A' et B' circulent sur deux pistes parallèles avec la même vitesse et forment un deuxième convoi C2. C1 et C2 sont espacé d'une distance de sécurité D déterminée de sorte à éviter les collisions entre les AMRs de C1 et ceux de C2 dans les sections de distribution qui seront décrites plus loin.

Le nombre d'AMRs pour former un convoi est au minimum de 2 et est déterminé selon l'application du principe de convoi.

Sur la figure 1, ces AMRs transportent des articles P1, P2, P3, P4, P5, toutefois, cela n'est pas nécessaire, des AMRs peuvent former un convoi sans être chargés, par exemple après avoir déposé des articles dans un stock.

La figure 2 représente schématiquement un exemple de section d'introduction selon l'invention. Une telle section est une portion du circuit de transport 20 dans laquelle est formé au moins un convoi. Un circuit de transport peut avoir une ou plusieurs sections d'introductions.

Comme montré sur la figure 2, une section d'introduction peut comprendre une ou plusieurs pistes T1, T2, T3. Dans l'exemple, il y a 3, pistes, mais le nombre peut être différent.

Pour créer un convoi dans la section d'introduction, on définit une grille de positions théoriques, représentées en pointillés sur la figure 2. La grille comprend les pistes T1, T2, T3 du circuit 20 et plusieurs rangs R1, R2, R3 parallèles croisant les pistes T1, T2, T3. Chaque point de croisement représente une position théorique qu'un AMR/AGV peut théoriquement occuper. Le nombre de rangs est au minimum de 2 dans un convoi.

Pour définir un convoi, chaque rang R1, R2, R3 est occupé une seule fois quelle que soit la piste. Donc, il est possible d'avoir un convoi avec des robots sur la même piste comme C1 dans la figure 1, il est aussi possible d'avoir des convois multipistes comme sur la figure 2 et comme C2 dans la figure 1.

De manière avantageuse, chaque deux positions théoriques de la même piste sont espacées d'une distance de sécurité prédéterminée *d*.

En conséquence deux robots successifs d'un même convoi circulant sur la même piste peuvent également être espacés de la même distance.

En outre, deux positions théoriques du même rang, par exemple R1, situés sur deux pistes voisines, T1, T2 par exemple, peuvent avantageusement avoir un décalage d'une distance a égale à la distance entre T1 et T2.

Par ailleurs, le décalage des positions et le croisement des rangs avec les pistes forme un angle positif ou négatif, par exemple de +45° ou -45°. Par exemple, sur la figure 2 l'orientation est négative. Le convoi formé par les AMRs A3, B3, C3 est en conséquence orienté négativement.

La figure 3 montre un exemple de système de transport 10 comprenant une section d'introduction Si identique à celle de la figure 2. Le système 10 comprend en outre une section de distribution Sd1. La section Sd1 est formée dans l'exemple de 3 pistes E11, E12, E13 d'entrée d'AMRs dans le prolongement des pistes T1, T2, T3 de la section d'introduction. Elle comprend également des pistes de sortie S11, S12, S13 qui croisent les pistes d'entrée. Dans l'exemple, l'angle de déviation formé est de +90°. Dans d'autres exemples l'angle peut être différent. Un robot arrivant à une entrée E11, E12, E13 peut aller tout droit dans un croisement ou tourner pour prendre une sortie S11, S12, S13 proche. Ainsi, chaque AMR ou AGV peut prendre l'une quelconque des sorties S11, S12, S13. Grace à la distance minimale *d* et le décalage longitudinal entre positions d'un même range appartenant à deux pistes parallèles, le risque de collisions est évité dans la mesure où les AMRs/AGVs du convoi circulèrent sensiblement avec la même vitesse.

De façon optionnelle, pour garantir davantage un déplacement sans collision, lorsqu'un premier robot suivi par un deuxième robot du même convoi sur la même piste d'entrée emprunte une première piste de sortie, on impose alors que le deuxième rebot emprunte une deuxième piste de sortie située avant la première piste de sortie.

Par exemple, deux AMRs successifs d'un convoi arrivant à la piste E11, le premier prend la sortie S13, le deuxième doit prendre une des sorties S12 ou S11.

Avantageusement, lorsqu'un robot d'un premier rang et un robot d'un rang suivant du même convoi, arrivent par deux pistes d'entrée parallèles et destinés à emprunter une même piste de sortie, le robot arrivant par une première piste d'entrée, le deuxième robot arrive alors par une deuxième piste d'entrée plus éloignée par rapport à une extrémité de sortie de ladite piste de sortie.

Par exemple, les AMRs A3 et C3 peuvent emprunter la même sortie sans collision.

Avantageusement, les pistes d'entrée et de sortie peuvent avoir la même langueur. En outre, au niveau des croisement, les rayons de courbure optionnels sont identiques le long des pistes dans la direction du flux. Avantageusement, la section de distribution peut être monodirectionnelle. Ceci garantit encore davantage une circulation sans risque de collisions.

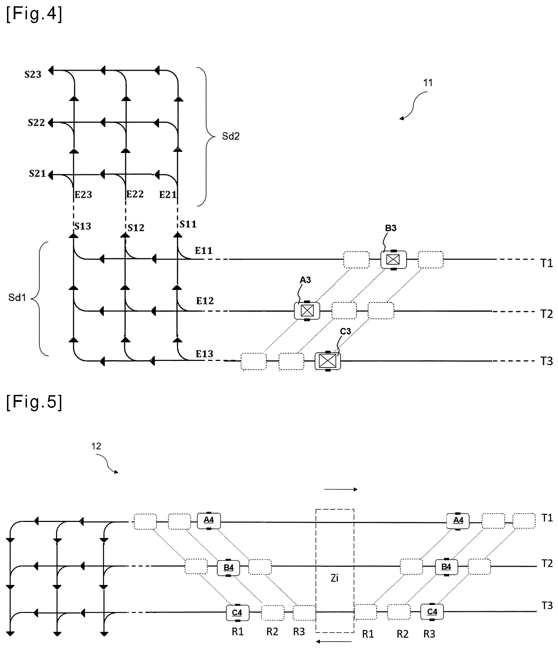

La figure 4 montre un autre mode de réalisation dans lequel le circuit de transport 11 comprend en plus de la section de distribution Sd1 décrite ci-dessus, une deuxième section de distribution Sd2 successive qui peut être identique ou différente de Sd1, mais dans l'orientation est adaptée à la disposition des sorties de Sd1. Par ailleurs, les mêmes règles décrites ci-dessus pour Sd1 peuvent s'appliquer à Sd2.

La figure 5 montre un autre exemple de système 12 de transport comprenant une zone de réorientation Zi entre deux sections de distribution.

Dans l'exemple, les AMRs A4, B4, C4 forment un convoi orienté négativement ce qui n'est pas compatible avec la section de distribution suivante, également orientée négativement. Pour adapter l'orientation du convoi, une étape de changement de l'orientation est exécutée dans la zone Zi par accélération et/ou décélération des robots situés sur les pistes T1 et T3 autonomes de sorte que C4 passe au premier rang R1 et A4 passe au troisième rang R3.

Dans cette configuration, les robots peuvent circuler sans risque de collision dans la section de distribution en respectant les règles décrites pour Sd1.

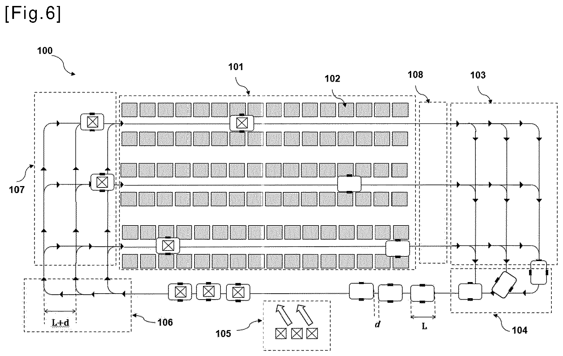

La figure 6 montre un exemple d'installation 100 de tri mettant en œuvre le procédé selon l'invention. L'installation 100 comprend une zone de tri 101 dans laquelle des chutes 102 sont agencées sur plusieurs lignes. Une zone 103 est prévue en sortie de la zone de tri et dans laquelle arrivent les AMRs/AGVs après déchargement dans les chutes 102. La zone 103 est une section de distribution minimisant le nombre de véhicules nécessaire au tri. Optionnellement, une section d'inversion 108 peut être prévue entre la zone 101 et la zone 103 pour réorienter correctement les AMRs/AGVs en sortie de la zone de tri 101.

Au début du processus de tri, des convois sont formés dans une section d'introduction 104, ensuite, les convois passent par une zone de chargement 105, connue en soit pour l'homme du métier, pour recevoir les colis à trier. Les AMRs passent ensuite par une première section de distribution 106 et une deuxième section de distribution 107 débouchant dans les lignes de tri de la zone de tri 101. Pour finir, chaque article est déchargé dans la chute 102 de destination. Dans cet exemple, l'espacement entre les pistes de la zone 107 et la zone 103 est égal à L+d ce qui permet aux sections de distribution 106 et 107 d'avoir la même orientation sans risque de collision pour les AMRs/AGVs.

Cet exemple d'application n'est bien sûr pas limitatif, de nombreuses autres applications sont possibles, à titre d'exemple, l'installation de tri peut être modifiée en ajoutant d'autres lignes de tri et des sections de distributions.

Dans une variante, la zone 103 peut être simplifiée pour être une zone d'accumulation et d'attente dans laquelle les AMRs/AGVs s'accumulent après déchargement dans les chutes 102. Dans ce cas, la section d'inversion 108 n'est plus nécessaire. Il n'est pas non plus nécessaire que l'écartement des pistes soit égal à L+d dans la zone 103.

Un autre exemple d'application est d'utiliser un système de transport similaire, avec une section d'introduction et des sections de distribution dans une installation de stockage automatique. Une telle installation comprend en plus de manière connue un stock sur plusieurs niveaux et un ou plusieurs dispositifs de monté/descente.

Dans ce cas, on peut par exemple prévoir une zone d'accumulation devant chaque dispositif de monté/descente pour le cas où le dispositif n'est pas disponible de suite à l'arrivée d'un AMR/AGV.

## Revendications

1. Procédé de transport d'articles (P1, P2, P3, P4, P5) dans un système intralogistique (1; 10 ; 11 ; 12 ) utilisant des robots (A, B, C) mobiles autonomes ou des véhicules automatiquement guidés, susceptibles chacun de transporter un article (P1, P2, P3, P4, P5) dans un circuit (2 ; 20) de transport dudit système, le procédé comprenant une étape de formation d'un convoi (C1, C2) comprenant au moins deux robots (A, B, C) mobiles circulant à une même vitesse au moins sur une portion dudit circuit (2), dans lequel ladite étape de formation du convoi (C1, C2) est éxécutée dans une section dite d'introduction (Si) et comprend une définition d'une grille de positions théoriques pouvant chacune être occupée par un robot mobile autonome, ladite grille comprenant une pluralité de pistes (T1, T2, T3) parallèles et une pluralité de rangs (R1, R2, R3) parallèles et successifs croisant lesdites pistes en formant avec elles un angle différent de zéro, le convoi comprenant deux robots ou plus (A, B, C) de rangs (R1, R2, R3) différents positionnés de manière que deux robots de rangs successifs d'une méme piste sont espacés d'une distance minimale (d) prédéterminée.

2. Procédé selon la revendication 1 dans lequel l'étape de formation d'un convoi comprend une sous-étape dans laquelle deux positions théoriques d'un même rang (R1, R2, R3) et appartenant à deux pistes (T1, T2, T3) adjacentes sont décalées suivant la direction longitudinale de la section d'introduction (Si) d'une distance (a) égale à l'écart entre lesdites deux pistes adjacentes (T1, T2, T3).

3. Procédé selon la revendication 2 dans lequel les rangs (R1, R2, R3) dans la section d'introduction (Si) forment avec les pistes (T1, T2, T3) un angle de +45° ou -45° correspondant respectivement à une orientation positive ou négative du convoi (C1, C2).

4. Procédé de transport selon l'une des revendications 1 à 34, dans lequel on ajoute au circuit (20) de transport une section de distribution (Sd1) reliée à la section d'introduction (Si), ladite section de distribution (Sd1) ayant une ou plusieurs pistes parallèles d'entrée (E11, E12, E13) de robots croisant plusieurs pistes parallèles de sortie (S11, S12, S13) des robots, lesdites pistes de sortie (S11, S12, S13) formant avec les pistes d'entée (E11, E12, E13) de robots un angle de déviation différent de zéro, le procédé comprend en outre une étape de déplacement des robots dudit convoi entre lesdites pistes d'entrée et lesdites pistes de sortie avec sensiblement la même vitesse.

5. Procédé selon la revendication 4 dans lequel on ajoute au circuit de transport au moins une section de distribution (Sd2) additionnelle, ayant une ou plusieurs deuxièmes pistes parallèles d'entrée (E21, E22, E23) de robots croisant une ou plusieurs deuxièmes pistes parallèles de sortie (S21, S22, S23) des robots, lesdites deuxièmes pistes de sortie (S21, S22, S23) formant avec les deuxièmes pistes d'entée (E21, E22, E23) de robots un angle de déviation différent de zéro et d'orientation inverse par rapport à l'angle de la section de distribution (Sd1), le procédé comprend en outre une étape de déplacement du convoi entre lesdites deuxièmes pistes d'entrée (E21, E22, E23) et l'une au moins desdites deuxièmes pistes de sortie (S21, S22, S23) avec sensiblement la même vitesse.

6. Procédé selon l'une des revendications 4 ou 5, comprenant une étape de changement de l'orientation du convoi par accélération et/ou décélération des robots mobiles autonomes (A, B, C) dans une zone de réorientation (Zi) prévue entre deux sections de distribution (Sd1, Sd2) successives.

7. Procédé selon l'une des revendications 4 à 6 dans lequel lorsqu'un premier robot (A, B) suivi par un deuxième robot (B, C) du même convoi sur la même piste d'entrée (E11, E12, E13, E21, E22, E23) emprunte une première piste de sortie (S12, S13, S22, S23), alors le deuxième rebot (B, C) emprunte une deuxième piste de sortie (S11, S12, S21, S22) située avant ladite première piste de sortie.

8. Procédé selon l'une des revendications 4 à 7 dans lequel lorsqu'un robot (A, B) d'un premier rang (R1) et un robot (B, C) d'un rang suivant (R2) du même convoi, arrivent par deux pistes d'entrée parallèles et destinés à emprunter une même piste de sortie, le robot (A, B) arrivant par une première piste d'entrée, le deuxième robot (B, C) arrive alors par une deuxième piste d'entrée plus éloignée par rapport à une extrémité de sortie de ladite piste de sortie.

9. Procédé selon l'une des revendications précédentes dans lequel le convoi (C1) est espacé d'un convoi suivant (C2) d'une distance de sécurité (D) prédéterminée.

10. Programme informatique comprenant des instructions pour mettre en œuvre le procédé selon l'un des revendications précédentes.

11. Support lisible par ordinateur comprenant un programme informatique selon la revendication précédente.

12. Système de transport intralogistique comprenant :
- une pluralité de robots mobiles autonomes (A, B, C) ou vehicules automatiquement guidés, susceptibles chacun de transporter un objet,
- un circuit de transport au sol (2, 20) dans lequel peuvent circuler les robots mobiles autonomes/vehicules automatiquement guidés, et
- un programme informatique,
selon la revendication 10.

13. Installation (100) de tri d'articles comprenant une zone de tri (101) et un sytème de transport selon la revendication précédente.

14. Installation de stockage automatique d'articles, comprenant une zone de stockage d'articles présentant une pluralité de niveaux de stockage et des moyens de montée et descente reliant lesdits niveaux, ladite installation comprend en outre un système de transport selon la revendication 12.

## Patentansprüche

1. Verfahren zum Transportieren von Artikeln (P1, P2, P3, P4, P5) in einem Intralogistiksystem (1 ; 10 ; 11 ; 12) unter Verwendung autonomer mobiler Roboter (A, B, C) oder automatisch geführter Fahrzeuge, die in der Lage sind, jeweils einen Artikel (P1, P2, P3, P4, P5) in einem Transportkreislauf (2 ; 20) des Systems zu transportieren, wobei das Verfahren einen Schritt des Bildens eines Konvois (C1, C2) umfasst, der mindestens zwei mobile Roboter (A, B, C) umfasst, die mindestens auf einem Abschnitt des Kreislaufs (2) mit gleicher Geschwindigkeit zirkulieren, wobei der Schritt des Bildens des Konvois (C1, C2) in einem Einführungsabschnitt (Si) ausgeführt wird und die Definition eines Rasters theoretischer Positionen umfasst, von denen jede von einem autonomen mobilen Roboter eingenommen werden kann, wobei das Raster eine Vielzahl paralleler Spuren (T1, T2, T3) und eine Vielzahl paralleler und aufeinanderfolgender Reihen (R1, R2, R3) umfasst, welche die Spuren kreuzen und mit ihnen einen von Null unterschiedlichen Winkel bilden, wobei der Konvoi zwei oder mehr Roboter (A, B, C) unterschiedlicher Reihen (R1, R2, R3) umfasst, die so positioniert sind, dass zwei Roboter aufeinanderfolgender Reihen derselben Spur um einen vorbestimmten Mindestabstand (d) voneinander beabstandet sind.

2. Verfahren nach Anspruch 1, wobei der Schritt des Bildens eines Konvois einen Unterschritt umfasst, wobei zwei theoretische Positionen derselben Reihe (R1, R2, R3), die zu zwei benachbarten Spuren (T1, T2, T3) gehören, in Längsrichtung des Einführungsabschnitts (Si) um einen Abstand (a) gleich dem Abstand zwischen den beiden benachbarten Spuren (T1, T2, T3) versetzt werden.

3. Verfahren nach Anspruch 2, wobei die Reihen (R1, R2, R3) im Einführungsabschnitt (Si) mit den Spuren (T1, T2, T3) einen Winkel von +45° oder -45° bilden, entsprechend einer positiven bzw. negativen Ausrichtung des Konvois (C1, C2).

4. Transportverfahren nach einem der Ansprüche 1 bis 3, wobei dem Transportkreislauf (20) ein mit dem Einführungsabschnitt (Si) verbundener Verteilungsabschnitt (Sd1) hinzugefügt wird, wobei der Verteilungsabschnitt (Sd1) eine oder mehrere parallele Einfahrtsspuren (E11, E12, E13) der Roboter aufweist, die mehrere parallele Ausfahrtsspuren (S11, S12, S13) der Roboter kreuzen, wobei die Ausfahrtsspuren (S11, S12, S13) mit den Einfahrtsspuren (E11, E12, E13) der Roboter einen von Null unterschiedlichen Abweichungswinkel bilden, und das Verfahren ferner einen Schritt des Fortbewegens der Roboter des Konvois zwischen den Einfahrtsspuren und den Ausfahrtsspuren mit im Wesentlichen der gleichen Geschwindigkeit umfasst.

5. Verfahren nach Anspruch 4, wobei dem Transportkreislauf mindestens ein zusätzlicher Verteilungsabschnitt (Sd2) hinzugefügt wird, der eine oder mehrere zweite parallele Einfahrtsspuren (E21, E22, E23) von Robotern aufweist, die eine oder mehrere zweite parallele Ausfahrtsspuren (S21, S22, S23) der Roboter kreuzen, wobei die zweiten Ausfahrtsspuren (S21, S22, S23) mit den zweiten Einfahrtsspuren (E21, E22, E23) der Roboter einen von Null unterschiedlichen Abweichungswinkel bilden, der eine umgekehrte Ausrichtung in Bezug auf den Winkel des Verteilungsabschnitts (Sd1) aufweist, und das Verfahren ferner einen Schritt des Fortbewegens des Konvois zwischen den zweiten Einfahrtsspuren (E21, E22, E23) und mindestens einer der zweiten Ausfahrtsspuren (S21, S22, S23) mit im Wesentlichen der gleichen Geschwindigkeit umfasst.

6. Verfahren nach einem der Ansprüche 4 oder 5, umfassend einen Schritt des Änderns der Ausrichtung des Konvois durch Beschleunigen und/oder Verlangsamen der autonomen mobilen Roboter (A, B, C) in einer zwischen zwei aufeinanderfolgenden Verteilungsabschnitten (Sd1, Sd2) vorgesehenen Neuausrichtungszone (Zi).

7. Verfahren nach einem der Ansprüche 4 bis 6, wobei, wenn ein erster Roboter (A, B), gefolgt von einem zweiten Roboter (B, C) desselben Konvois auf derselben Einfahrtsspur (E11, E12, E13, E21, E22, E23), eine erste Ausfahrtsspur (S12, S13, S22, S23) nimmt, der zweite Roboter (B, C) eine zweite Ausfahrtsspur (S11, S12, S21, S22) nimmt, die sich vor der ersten Ausfahrtsspur befindet.

8. Verfahren nach einem der Ansprüche 4 bis 7, wobei, wenn ein Roboter (A, B) einer ersten Reihe (R1) und ein Roboter (B, C) einer darauffolgenden Reihe (R2) desselben Konvois über zwei parallele Einfahrtsspuren ankommen und dieselbe Ausfahrtsspur nehmen sollen, der Roboter (A, B) über eine erste Einfahrtsspur ankommt, der zweite Roboter (B, C) anschließend über eine zweite Einfahrtsspur ankommt, die weiter von einem Ende der Ausfahrtsspur entfernt ist.

9. Verfahren nach einem der vorstehenden Ansprüche, wobei der Konvoi (C1) von einem nachfolgenden Konvoi (C2) um einen vorbestimmten Sicherheitsabstand (D) beabstandet ist.

10. Computerprogramm, umfassend Anweisungen zur Durchführung des Verfahrens nach einem der vorstehenden Ansprüche.

11. Computerlesbares Medium, umfassend ein Computerprogramm gemäß dem vorstehenden Anspruch.

12. Intralogistisches Transportsystem, umfassend:
- eine Vielzahl autonomer mobiler Roboter (A, B, C) oder automatisch geführter Fahrzeuge, die jeweils in der Lage sind, ein Objekt zu transportieren,
- einen Bodentransportkreislauf (2, 20), in dem die autonomen mobilen Roboter/automatisch geführten Fahrzeuge zirkulieren können, und
- ein Computerprogramm nach Anspruch 10.

13. Anlage (100) zum Sortieren von Artikeln, umfassend einen Sortierbereich (101) und ein Transportsystem nach dem vorstehenden Anspruch.

14. Automatische Artikellageranlage, umfassend einen Artikellagerbereich mit einer Vielzahl von Lagerebenen und Hebe- und Senkmitteln, welche die Ebenen verbinden, wobei die Anlage ferner ein Transportsystem nach Anspruch 12 umfasst.

## Claims

1. Method for transporting items (P1, P2, P3, P4, P5) in an intralogistics system (1; 10; 11; 12) using autonomous mobile robots (A, B, C) or automatically guided vehicles, each able to transport an item (P1, P2, P3, P4, P5) in a transport circuit (2; 20) of said system, the method comprising a step of forming a convoy (C1, C2) comprising at least two mobile robots (A, B, C) traveling at the same speed at least on a part of said circuit (2), wherein said step of forming the convoy (C1, C2) is performed in what is known as an introduction portion (Si) and comprises defining a grid of theoretical positions, each able to be occupied by an autonomous mobile robot, said grid comprising a plurality of parallel tracks (T1, T2, T3) and a plurality of successive parallel rows (R1, R2, R3) crossing said tracks and forming with them an angle other than zero, the convoy comprising two or more robots (A, B, C) of different rows (R1, R2, R3) positioned in such a way that two robots of successive rows of the same track are spaced apart by a predetermined minimum distance (d).

2. The method according to claim 1, wherein the convoy formation step comprises a sub-step wherein two theoretical positions of the same row (R1, R2, R3) and belonging to two adjacent tracks (T1, T2, T3) are offset in the longitudinal direction of the introduction portion (Si) by a distance (a) equal to the distance between said two adjacent tracks (T1, T2, T3).

3. The method according to claim 2, wherein the rows (R1, R2, R3) in the introduction portion (Si) form an angle of +45° or -45° with the tracks (T1, T2, T3), corresponding respectively to a positive or negative orientation of the convoy (C1, C2).

4. The transport method according to any of claims 1 to 3, wherein a distribution portion (Sd1) connected to the introduction portion (Si) is added to the transport circuit (20), said distribution portion (Sd1) having one or more parallel entry tracks (E11, E12, E13) for robots intersecting a plurality of parallel exit tracks (S11, S12, S13) for the robots, said exit tracks (S11, S12, S13) forming, with the robot entry tracks (E11, E12, E13), a deviation angle other than zero, the method further comprising a step of moving the robots of said convoy between said entry tracks and said exit tracks at substantially the same speed.

5. The method according to claim 4, wherein at least one additional distribution portion (Sd2) is added to the transport circuit, having one or more parallel second entry tracks (E21, E22, E23) for robots intersecting one or more parallel second exit tracks (S21, S22, S23) for the robots, said second exit tracks (S21, S22, S23) forming, with the second entry tracks (E21, E22, E23) for robots, a deviation angle other than zero and of opposite orientation to the angle of the distribution portion (Sd1), the method further comprising a step of moving the convoy between said second entry tracks (E21, E22, E23) and at least one of said second exit tracks (S21, S22, S23) at substantially the same speed.

6. The method according to one of claims 4 or 5, comprising a step for changing the orientation of the convoy by accelerating and/or decelerating the autonomous mobile robots (A, B, C) in a reorientation zone (Zi) provided between two successive distribution portions (Sd1, Sd2).

7. The method according to any of claims 4 to 6, wherein when a first robot (A, B) followed by a second robot (B, C) of the same convoy on the same entry track (E11, E12, E13, E21, E22, E23) takes a first exit track (S12, S13, S22, S23), then the second robot (B, C) takes a second exit track (S11, S12, S21, S22) located before said first exit track.

8. The method according to any of claims 4 to 7, wherein when a robot (A, B) of a first row (R1) and a robot (B, C) of a following row (R2) of the same convoy arrive via two parallel entry tracks and are meant to take the same exit track, the robot (A, B) arriving via a first entry track, the second robot (B, C) then arrives via a second entry track further away from an exit end of said exit track.

9. The method according to any of the preceding claims, wherein the convoy (C1) is spaced apart from a following convoy (C2) by a predetermined safety distance (D).

10. A computer program comprising instructions for carrying out the method according to any of the preceding claims.

11. A computer-readable medium comprising a computer program according to the preceding claim.

12. An intralogistics transport system comprising:
- a plurality of autonomous mobile robots (A, B, C) or automatically guided vehicles, each able to transport one object,
- a ground transport circuit (2, 20) where the autonomous mobile robots/automatically guided vehicles can travel, and
- a computer program according to claim 10.

13. A facility (100) for sorting items comprising a sorting zone (101) and a transport system according to the preceding claim.

14. An automatic storage facility for items, comprising an item storage zone having a plurality of storage levels and raising and lowering means connecting said levels, said facility further comprising a transport system according to claim 12.
